# EUROPÄISCHE PATENTSCHRIFT

(11) **EP 3 370 318 B1**
(45) Veröffentlichungstag und Bekanntmachung des Hinweises auf die Patenterteilung: **07.07.2021**
(21) Anmeldenummer: 18159250.2
(22) Anmeldetag: 28.02.2018
(51) Int. Cl.: H02J 1/08, G08B 13/14, H02H 5/10

(54) **WARENSICHERUNGSSYSTEM MIT ELEKTRISCHER LEISTUNGSVERSORGUNG**
MERCHANDISE SECURITY SYSTEM COMPRISING ELECTRIC POWER SUPPLY
SYSTÈME DE SÉCURITÉ DE MARCHANDISE COMPRENANT UNE ALIMENTATION ÉLECTRIQUE

(30) Priorität: 02.03.2017 DE 102017104420
(43) Veröffentlichungstag der Anmeldung: 05.09.2018
(73) Patentinhaber: Zelos Concept GmbH, 33378 Rheda-Wiedenbrück (DE)
(72) Erfinder: MERSCHMANN, Carsten, 33378 Rheda-Wiedenbrück (DE)
(74) Vertreter: Kalkoff & Partner Patentanwälte mbB

(56) Entgegenhaltungen:
- WO-A1-2016/130762
- DE-B3-102013 111 132
- US-A1- 2005 001 485
- US-A1- 2012 192 600

## Beschreibung

Die Erfindung betrifft ein Warensicherungssystem für mindestens ein elektrisches Gerät sowie ein Verfahren zur Sicherung mindestens eines elektrischen Geräts. Insbesondere betrifft die Erfindung ein Warensicherungssystem, mit dem gesicherte elektrische Geräte mit elektrischer Energie versorgt werden können.

Die DE 296 235 41 U1 beschreibt eine Anlage zur Sicherung von Waren gegen Diebstahl, vor allem in Ladengeschäften, bei denen eine große Anzahl von Ausstellungsgeräten betriebsfertig und zur testweisen Benutzung durch Kunden bereitgehalten wird. Die Geräte sind durch Anbringung von Überwachungsfühlern gesichert, die ihrerseits an eine Zentraleinheit angeschlossen werden. Beim Aufheben der ordnungsgemäßen Anbringung eines Überwachungsfühlers an der zu sichernden Ware löst eine in der Zentraleinheit angeordnete Überwachungsschaltung einen Alarm aus, um einen Diebstahl des gesicherten Gerätes zu vermeiden.

Sofern es sich bei den gesicherten Waren um mobile elektrische Geräte handelt, ist es sinnvoll, eine Möglichkeit zur Versorgung der Geräte mit elektrischer Leistung bereitzustellen, so dass diese aufgeladen oder betrieben werden können.

Die US 7,015,596 beschreibt ein System zur Ausstellung von elektrischen Geräten, die durch Kabelstrukturen mit einem Basismodul verbunden sind. An jedem Gerät ist das Gehäuse eines Sicherheitsschaltkreises angebracht. Die Kabelverbindungen sind in Basis-Leistungsversorgungsmodulen eingesteckt, die durch eine an eine Netzspannung angeschlossene Versorgung mit Gleichspannung versorgt werden, die mindestens so hoch ist, wie die maximal zur Versorgung der elektrischen Geräte benötigte Spannung. Ein Spannungsregler wandelt die Spannung in die für das jeweilige Gerät angemessene Spannung um. Ein Widerstand wird zur Spannungsvorgabe verwendet. Stellt die Alarmschaltung fest, dass die Kabelverbindung unterbrochen oder das Gerät ausgesteckt wird, wird ein Alarm ausgelöst.

Die US 2010/0176945 offenbart ein Sicherheitssystem für Waren mit einem abnehmbaren Gehäuse an der Ware, das über eine Kabelverbindung mit einer Basis verbunden ist. Die Basis, oder bevorzugt das Gehäuse, kann einen Spannungsregler enthalten, um die Spannung einer Leistungsversorgung für die Ware passend einzustellen.

Die US 2010/0194568 beschreibt Systeme und Verfahren, bei denen ein Diebstahlsensor an Geräten angebracht ist und mittels eines Kabels mit einem Alarmgerät verbunden ist. Mehrere Geräte können über einen Multiplexer abwechselnd geladen werden.

Die DE 10 2013 111 132 B3 beschreibt ein Warensicherungssystem mit einer Stromversorgung für ein elektrisches Gerät. Ein Sicherungskopf zur Anbringung an ein zu überwachendes elektrisches Gerät weist einen Ladeanschluss zur elektrischen Verbindung mit dem Gerät auf. Eine mit dem Sicherungskopf über eine Kabelverbindung verbundene Basis weist eine geregelte elektrische Leistungsversorgung auf, um über die Kabelverbindung dem Ladeanschluss geregelte elektrische Leistung zuzuführen. Im Sicherungskopf ist eine Überwachungsschaltung vorgesehen, um einen Istwert einer elektrischen Größe der bereit gestellten elektrischen Leistung zu erfassen. Die Überwachungsschaltung ist über die Kabelverbindung mit der Basis verbunden, um ein Regelsignal in Abhängigkeit von der erfassten elektrischen Größe zu übermitteln.

Die WO 2007/066159 A1 bezieht sich auf die Verbindung von Alarmeinheiten und zu schützenden Waren. Eine Alarmeinheit weist mehrere Signalkabel auf, die mit verschiedenen Sensoreinheiten an den zu schützenden Waren verbunden sind. Ein Versorgungskabel ist mit einer Energiequelle verbunden. Ein Sammelkörper teilt sowohl das Signalkabel als auch das Versorgungskabel in einen externen und einen internen Kabelabschnitt. Ein elektrisches Gerät als zu sichernde Ware kann über einen Adapter mit einem Leistungsversorgungsanschluss verbunden sein. Am Sammelkörper ist ein Transformator mit einer wählbaren Ausgangsspannung vorgesehen, so dass Energie in der benötigten Form zum Betrieb der Ware bereitgestellt werden kann.

Die US 2008/0168806 A1 beschreibt ein Sicherheitssystem zum Schutz von Waren. Ein Verkaufsgegenstand ist mit einem Sensor verbunden, der entnehmbar an einem Präsentationsmodul angeordnet und damit über eine Versorgungsleitung verbunden ist. Ein Alarmmodul ist unzugänglich angeordnet und mit den Präsentationsmodulen durch eine andere Leitung verbunden. Eine Versorgungsleitung verbindet jedes der Präsentationsmodule mit einer elektrischen Energiequelle, so dass der Sensor durch das Präsentationsmodul versorgt wird und zur Erhaltung der Ladung der Batterie der geschützten Waren verwendet werden kann.

Die DE 195 18 752 A1 beschreibt eine Diebstahlsicherungsanlage. In einem Hauptkörper sind eine Spannungsversorgung und ein Summer angeordnet. Über Zwischenverstärker sind Sensoren mit jeweils einem Fototransistor zur Sicherung von Pappschachteln angeschlossen.

Die Druckschrift US 2007/0194918 A1 offenbart ein Darstellungssystem für batteriebetriebene Geräte mit Mitteln zur Anbringung an dem Gerät, einem Rückzugsmechanismus, der über eine Leitung mit den Anbringungsmitteln verbunden ist und einer Alarmierungsvorrichtung, die das Durchschneiden der Verbindung erkennt und einen Alarm auslösen kann. Vorgesehen ist weiter eine Ladevorrichtung für eine Batterie des Geräts.

Die WO 2016/130762 A1 betrifft ein System und Verfahren zur Gewinnung von Daten von präsentierter Ware. Auf einer Ladentheke sind eine Mehrzahl von Sicherheitsgeräten angeordnet, die jeweils einen Sensor, ein Kabel und eine Ablage umfassen. Das Kabel kann mit der Ablage und/oder mit einem Controller verbunden sein. Am Sensor oder der Ablage kann eine Alarmschaltung angeordnet sein. Der Controller kann dazu ausgelegt sein, eine Spannung für die Sicherheitsgeräte und daran befestigte Ware zu übermitteln und zu regeln.

Die US 2005/001485 A1 beschreibt ein System zur Darstellung elektronischer Geräte. An einem Basismodul mit mehreren Anschlüssen sind über Kabel Sicherheitsmodule angeschlossen. Ein Schaltkreis in den Sicherungsmodulen umfasst einen Spannungsregler, der eine Arbeitsspannung von bspw. 15V in eine passende Spannung für ein zu sicherndes Gerät wandelt.

Die US 2012/192600 A1 beschreibt einen Sensor zur Anbringung an zu sichernder Ware, der über ein Sensorkabel mit einer Basis verbunden ist. Im Sensor sind ein Spannungsregler und Sensorelektronik angeordnet. Einige der Leiter des Sensorkabels versorgen den Spannungsregler mit elektrischer Leistung, so dass dieser die Spannung in eine Betriebsspannung für die zu sichernde Ware umwandelt. Verschiedene Leistungsverbinder können für die Ware vorgesehen sein, um verschiedene Spannungen zu liefern.

Es kann als Aufgabe angesehen werden, ein Warensicherungssystem sowie ein Verfahren zur Sicherung mindestens eines elektrischen Geräts vorzuschlagen, mit denen verschiedene Arten von elektrischen Geräten in verschiedener Anzahl flexibel gesichert werden können.

Die Aufgabe wird gelöst durch ein Warensicherungssystem gemäß Anspruch 1 und ein Verfahren gemäß Anspruch 11. Abhängige Ansprüche beziehen sich auf vorteilhafte Ausführungsformen der Erfindung.

Mit dem erfindungsgemäßen Warensicherungssystem und Sicherungsverfahren können verschiedene Waren gesichert werden, wobei mindestens ein gesichertes elektrisches Gerät gleichzeitig auch mit elektrischer Leistung versorgt werden kann. Nachfolgend wird der grundsätzliche Aufbau bzw. Ablauf zunächst anhand einer minimalen Konfiguration mit einer Sicherungszentrale, einer daran angeschlossenen Leistungseinheit, und einem an die Leistungseinheit angeschlossenen Sicherungskopf für ein elektrisches Gerät erläutert. In der Mehrzahl der praktischen Anwendungen werden neben dem zu sichernden Gerät weitere zu sichernde Waren, weitere Sicherungsköpfe sowie weitere Leistungseinheiten vorgesehen sein. So können bspw. mindestens zwei, drei, oder mehr Leistungseinheiten, jeweils mit einem oder mehreren Sicherungsköpfen angeschlossen sein.

Erfindungsgemäß verfügt die Sicherungszentrale über eine Mehrzahl von Anschlüssen, bevorzugt als Buchsen für Steckeranschlüsse. An jeden Anschluss können dabei bevorzugt verschiedene Geräte angeschlossen werden, wobei das erfindungsgemäße System mindestens eine angeschlossene Leistungseinheit umfasst.

Eine Leistungseinheit ist über eine erste Verbindung, bevorzugt eine Kabelverbindung mit bspw. mehr als zwei Leitern, an einem der Anschlüsse angeschlossen. An die Leistungseinheit ist über eine zweite Verbindung mindestens ein Sicherungskopf angeschlossen, wobei es sich wiederum bevorzugt um eine Kabelverbindung mit bspw. mehr als zwei Leitern handelt, insbesondere bevorzugt um eine Spiralkabelverbindung. Wie nachfolgend näher erläutert wird, dienen die erste und zweite Verbindung dabei bevorzugt sowohl zur Signalübermittlung als auch zur Übertragung elektrischer Leistung. Die Signalübertragung kann wie nachfolgend näher erläutert wird einerseits Sicherungssignale umfassen, bspw. Signale eines Sicherungssensors, und andererseits Steuersignale, die zum Zweck der Steuerung bzw. Regelung des Verhaltens der verbundenen Einheiten ausgetauscht werden, bevorzugt als Digitalsignale. Dabei werden bevorzugt verschiedene Leiter der jeweiligen Kabelverbindung für die jeweilige Form der Übertragung genutzt, wobei allerdings prinzipiell auch ein oder mehrere Leiter gemeinsam für dieselbe Übertragung verwendet werden können.

Der Sicherungskopf dient zur Anbringung an zu sichernden Waren, insbesondere dem zu sichernden elektrischen Gerät. Erweist einen Sicherungssensor auf, worunter jede Form eines Sensors für die Anwesenheit des Geräts verstanden wird. Bei den zu sichernden Geräten handelt es sich üblicherweise um Mobilgeräte, bspw. um Mobiltelefone, Notebooks, Tablet-Computer, Fotoapparate, Navigationsgeräte, Smartwatches, Wearables, 3D-Brillen, etc. Es kommen verschiedene Typen oder Kombinationen von Sicherungssensoren in Frage, wie z.B. ein Anbringungs- bzw. Kontakt- oder Nähesensor, bspw. nach mechanischem Wirkprinzip (bspw. Schalter) oder alternativ nach anderem Wirkprinzip mit optischer, kapazitiver und/oder induktiver Erfassung, etc. Ebenso kommen Lage- oder Beschleunigungssensoren in Frage. Besonders bevorzugt ist die Kombination aus einem Anbringungssensor mit einem Lage- oder Beschleunigungssensor.

Bei einer Erfassung eines Signals durch den Sicherungssensor, das auf eine Trennung des Sicherungskopfes von dem Gerät deuten könnte, wird ein Sensorsignal erzeugt. Auslösende Ereignisse, die durch den Sicherungssensor erfasst werden können, können neben dem Abnehmen des Sicherungskopfes von der Ware alternativ bzw. zusätzlich auch Ereignisse wie Lageveränderung, Veränderung der Stromentnahme, etc. sein. Das Sensorsignal ist bevorzugt ein elektrisches Signal, das bevorzugt über die zweite Verbindung zur Leistungseinheit und von dort über die erste Verbindung zur Sicherungszentrale übermittelt wird. Unter einem elektrischen Signal wird dabei jede aktiv oder passiv durch eine elektrische Schaltung erkennbare Information verstanden, bspw. auch das Ausbleiben einer elektrischen Größe, d. h. bspw. eine Strom- oder Spannungsunterbrechung, eine Widerstandsänderung, etc. Die Signalübermittlung kann analog oder digital sein. Das Signal kann zunächst über die zweite Verbindung zur Leistungseinheit und darauffolgend von der Leistungseinheit über die erste Verbindung zur Sicherungszentrale in ungeänderter Form übermittelt werden, oder alternativ in der Leistungseinheit verarbeitet und über die erste Verbindung in geänderter Form, bspw. als Digitalsignal aus einem vorherigen Analogsignal, weiter übermittelt werden.

Die Sicherungszentrale ist ausgebildet zur Auslösung einer Alarmierung bei einer direkten oder indirekten Erkennung des Sensorsignals. Ein Alarm kann lokal in der Sicherungszentrale, bspw. durch Aktivierung eines akustischen und/oder optischen Signalgebers erfolgen, oder in Form einer externen Signalisierung durch Übermittlung eines Alarmsignals an eine externe Einheit.

Die Sicherungszentrale weist Mittel auf zur Bereitstellung von elektrischer Leistung für die Leistungseinheit über die erste Verbindung. Dabei wird eine Versorgung mit vorgegebenen, festgelegten Werten bspw. für die Spannung (alternativ auch für den Strom) bereitgestellt. Die Leistungsversorgung kann in Form von Gleich- oder Wechselspannung erfolgen, wobei die entsprechenden Werte bevorzugt zeitlich konstant sind. Im bevorzugten Fall des Anschlusses mehrerer Leistungseinheiten werden bevorzugt alle Leistungseinheiten mit der gleichen Spannung versorgt. So kann der Aufbau der Sicherungszentrale hinsichtlich der elektrischen Leistungsversorgung besonders einfach gehalten werden.

Erfindungsgemäß findet in der Leistungseinheit eine Anpassung der elektrischen Leistung statt, die eine Versorgung des elektrischen Geräts mit passenden elektrischen Werten an einem Versorgungsanschluss am Sicherungskopf ermöglicht. Hierfür umfasst die Leistungseinheit einen einstellbaren elektrischen Wandler, um die über die erste Verbindung bereitgestellte elektrische Leistung bspw. in einen Versorgungsspannungswert (oder alternativ auch Versorgungsstromwert) zu wandeln und die so gewandelte elektrische Energie über die zweite Verbindung dem Sicherungskopf zuzuführen, wo sie am Versorgungsanschluss bereitgestellt wird.

Das zu sichernde elektrische Gerät kann somit direkt am Sicherungskopf mit elektrischer Leistung versorgt werden, bspw. zum probeweisen Betrieb des Geräts oder zum Aufladen des internen Akkus.

Die Leistungseinheit dient dazu, die elektrische Versorgungsleistung auf einen zur Versorgung des Geräts angepassten Wert für Strom und/oder Spannung zu wandeln. Dabei können für unterschiedliche elektrische Geräte bevorzugt unterschiedliche Werte bspw. für die Spannungsversorgung gewählt werden. Als elektrischer Wandler innerhalb der Leistungseinheit kann jede elektrische Schaltung dienen, die eine Beeinflussung, d. h. Steuerung und/oder Regelung der elektrischen Leistung, Strom und/oder Spannung ermöglicht. Bevorzugt ist ein Spannungsregler, der eine höhere, konstante Versorgungsspannung, die an mehreren Anschlüssen bereitgestellt wird, in eine geringere Spannung zur Versorgung des zu sichernden Geräts wandelt.

Mit dem erfindungsgemäßen System und Verfahren kann ein Warensicherungssystem modular aufgebaut und betrieben werden. Die Leistungselektronik sowie eventuelle Wandler- bzw. Regelschaltungen sind bevorzugt in der Leistungseinheit angeordnet, während die Sicherungszentrale zur Lieferung von elektrischer Leistung mit festen Werten vergleichsweise einfach aufgebaut sein kann. Dies ermöglicht eine hochflexible Konfiguration von Warensicherungssystemen je nach Anforderung. Dabei hat es sich als besonders vorteilhaft erwiesen, die Leistungseinheiten separat von der Sicherungszentrale vorzusehen. Bevorzugt sind die Leistungseinheiten außerhalb eines Gehäuses der Sicherungszentrale und besonders bevorzugt in einem gewissen Abstand hierzu angeordnet, wobei die Länge der ersten Verbindung bspw. mehr als 5 cm, bevorzugt mehr als 10 cm betragen kann. Dies hat den Vorteil, dass eine evtl. Wärmeentwicklung an den Leistungseinheiten durch den Betrieb des elektrischen Wandlers geeignet räumlich verteilt werden kann.

Erfindungsgemäß wird über die zweite Verbindung ein Einstellsignal für den elektrischen Wandler in der Leistungseinheit übermittelt. Der elektrische Wandler wird gemäß des Einstellsignals eingestellt. Unter einem Einstellsignal wird dabei jedes digitale oder analoge Signal verstanden, das die Einstellung des elektrischen Wandlers erlaubt, d. h. insbesondere die von diesem zu liefernde Werte für bspw. Strom und/oder Spannung.

Ein Vorgabewert für den gewünschten Strom und/oder die Spannung am Versorgungsanschluss ist bevorzugt wählbar, um für verschiedene zu sichernde Geräte jeweils eine angepasste elektrische Leistungsversorgung bereitstellen zu können. Die Auswahl geeigneter Werte kann bevorzugt über ein Auswahlelement am Sicherungskopf erfolgen. Besonders bevorzugt ist es dabei, dass verschiedene elektrische Bauteile oder Kombinationen von Bauteilen am Sicherungskopf als Auswahlelemente zur Auswahl verschiedener Werte verwendet werden können. Als Auswahlelement kommen bspw. alle Arten von Bauteilen oder Schaltungen in Frage, die elektrisch identifizierbar sind. Beispielsweise kann ein Widerstandswert, ebenso aber auch ein Kapazitätswert oder eine Induktivität eines Bauelements, die Resonanzfrequenz eines Schwingkreises, etc. zur Auswahl genutzt werden. Als Auswahlelement kann auch bspw. ein Wahlschalter dienen. Insbesondere können die Auswahlelemente dabei in oder an einem am Versorgungsanschluss einzusteckenden Kabel oder Adapter vorgesehen sein. Der Sicherungskopf weist dann bevorzugt eine Detektionsschaltung für das Auswahlelement auf, mit der der Bauteilwert ermittelt werden kann, so dass eine Zuordnung zu dem jeweiligen Vorgabewert möglich ist.

Weiter ist erfindungsgemäß am Sicherungskopf eine Messvorrichtung zur Ermittlung eines Messwerts von Spannung und/oder Strom am Versorgungsanschluss vorgesehen. Eine solche Messvorrichtung kann insbesondere zur Regelung von bereitgestelltem Strom und/oder Spannung verwendet werden. Dabei wird zwischen dem Messwert und einem Vorgabewert eine Abweichung ermittelt. Der elektrische Wandler der Leistungseinheit wird entsprechend der Abweichung geregelt (geschlossener Regelkreis). Die Abweichung kann bereits im Sicherungskopf ermittelt und über die zweite Verbindung als analoges oder digitales Signal an die Leistungseinheit übermittelt werden. Alternativ ist es auch möglich, den Messwert über die zweite Verbindung zu übermitteln und die Abweichung in der Leistungseinheit zu ermitteln. In beiden Fällen ist die Bildung eines geschlossenen Regelkreises über die zweite Verbindung möglich, mit dem der elektrische Wandler in der Leistungseinheit so angesteuert werden kann, dass am Versorgungsanschluss stets die gewünschten Werte erreicht werden. So können die insbesondere bei hohen Strömen u. U. signifikanten Verluste in der zweiten Verbindung kompensiert werden.

Wie nachfolgend erläutert wird, kann das modulare Konzept gemäß der Erfindung in vielerlei Hinsicht weitergebildet werden.

Eine Weiterbildung des Warensicherungssystems sowie des Verfahrens sieht eine Leistungssteuerung in der Sicherungszentrale vor. Hierzu kann die Sicherungszentrale eine Leistungssteuereinrichtung zur Steuerung der an den Anschlüssen entnommenen elektrischen Leistung aufweisen. Während eine solche Steuerung im Prinzip mittels einer oder mehrerer Steuer- bzw. regelbarer Leistungsversorgungen innerhalb der Sicherungszentrale realisiert sein kann, wird die Leistungssteuerung bevorzugt durch die Übermittlung von Vorgaben an die Leistungseinheit (bzw. an mehrere angeschlossene Leistungseinheiten) erreicht. Hierzu kann über die erste Verbindung, bspw. als digitale Daten, ein Steuersignal zur Leistungssteuerung, bspw. ein Maximalwert oder mehrere Maximalwerte für die elektrische Leistung, den Strom und/oder die Spannung an eine oder mehrere Leistungseinheiten übermittelt werden. Die jeweilige Leistungseinheit steuert den elektrischen Wandler dann gemäß der Vorgabe an, bspw. so, dass die vorgegebenen Maximalwerte nicht überschritten werden. Dabei wird insbesondere bevorzugt den Leistungseinheiten jeweils ein Maximalwert der elektrischen Leistung übermittelt. Diese überwachen die vom elektrischen Wandler gelieferte elektrische Leistung und steuern diesen beim Erreichen des jeweiligen Maximalwerts so an, dass die Leistung verringert wird, bspw. durch Verringerung der Spannung.

Durch die Leistungssteuereinrichtung kann insbesondere eine begrenzte in der Sicherungszentrale zur Verfügung stehende primäre elektrische Gesamtleistung sinnvoll auf mehrere angeschlossene Leistungseinheiten (oder auch andere angeschlossene Geräte) verteilt werden. Hierdurch ist eine ökonomische Auslegung der primären Leistungsversorgung für die Sicherungszentrale möglich, ohne dass die Gefahr einer Überlast besteht. Der Wert für die insgesamt zur Verfügung stehende primäre elektrische Leistung kann in der Sicherungszentrale vorgegeben sein. Die Verteilung auf angeschlossene Leistungseinheiten kann dann anhand der Anzahl der angeschlossenen Leistungseinheiten sowie ggf. auch auf Basis von elektrischen Größen der Entnahme von elektrischer Energie an den Versorgungsanschlüssen und/oder abhängig von elektrischen Größen der von den Leistungseinheiten gelieferten elektrischen Energie vorgegeben werden. Dabei kann bspw. die primäre elektrische Leistung gleich auf alle angeschlossenen Leistungseinheiten verteilt, d. h. gleiche Maximalwerte vorgegeben werden. Ebenso ist aber auch eine unterschiedliche Anpassung je nach Verwendung der Leistungseinheiten möglich.

Die Sicherungszentrale und/oder die Leistungseinheit(en) sowie auch die Sicherungsköpfe können auf verschiedene Weise so ausgebildet sein, dass die jeweils beschriebene Funktionalität erreicht wird. Dies umfasst analoge, digitale sowie hybride analog/digitale elektrische Schaltungen. In bevorzugten Ausführungsformen wird die gewünschte Funktionalität durch eine entsprechende Programmierung realisiert. Sicherungszentrale, Sicherungskopf und/oder Leistungseinheit(en) umfassen dann jeweils mindestens eine Zentraleinheit - bspw. Mikrocontroller, Mikroprozessor, Signalprozessor, etc. - zur Ausführung eines gespeicherten Programms. Die Zentraleinheit ist mit den übrigen Elementen verbunden und steuert diese bei Ausführung des Programms so an, dass die erläuterte Funktionalität erreicht wird. Die Verwendung von "intelligenten" d. h. programmierbaren Einheiten erlaubt zudem in besonders einfacher Weise die Realisierung digitaler Kommunikation über die erste und/oder die zweite Verbindung, bspw. für die Vorgabe von Maximalwerten für die Leistungsversorgung. Das jeweilige Steuerprogramm ist bevorzugt änderbar, so dass Updates möglich sind um die Funktionalität zu verbessern.

Gemäß einer Weiterbildung der Erfindung kann an der Leistungseinheit ein Anschluss für eine Beleuchtungseinheit vorgesehen sein, insbesondere für eine ein- oder mehrkanalige (LED)-Lichtquelle z.B. mit steuerbarer Farbe. Zur Versorgung der Beleuchtungseinheit kann eine Versorgungsschaltung vorgesehen sein, die bspw. gesteuert wird, um z.B. elektrische Leistung in modulierter Form abzugeben um gewünschte Beleuchtungseffekte zu erzielen.

In besonders bevorzugten Ausführungen kann das Warensicherungssystem mindestens eine digitale Kommunikationsschnittstelle aufweisen, die einen Datenaustausch bspw. mit einem externen Gerät ermöglicht, bspw. ein Smartphone, Tablet oder Computer, auf dem eine passende Software installiert sein kann. Die Kommunikationsschnittstelle kann bevorzugt an der Sicherungszentrale angeordnet sein und eine digitale Kommunikation mit der Zentraleinheit der Sicherungszentrale ermöglichen. Über die digitale Kommunikationsschnittstelle, die bspw. als digitale Netzwerkschnittstelle (drahtlos oder drahtgebunden, bspw. Ethernet, Wlan, Bluetooth, etc.) ausgebildet sein kann, sind verschiedene Funktionen möglich. So können bspw. Betriebsdaten der Sicherungszentrale oder von daran angeschlossenen Einheiten, bspw. auch eine Alarmmeldung, über die Schnittstelle an ein angeschlossenes externes Gerät ausgegeben werden. Ebenso sind auch Eingaben, Steuerungen und Datenübertragungen von dem angeschlossenen externen Gerät an Einheiten des Warensicherungssystems möglich. So können bspw. Steuerkommandos, aber auch Software-Updates für die Sicherungszentrale und/oder für daran angeschlossene Einheiten über die Schnittstelle in das System eingebracht werden. Dabei werden bevorzugt innerhalb des Systems Daten bspw. über die erste und ggfs. die zweite Verbindung übermittelt, bspw. Betriebsdaten von einem Sicherungskopf oder einer Leistungseinheit an die Sicherungszentrale, oder umgekehrt Updates oder Steuerkommandos von der Sicherungszentrale an angeschlossene Leistungseinheiten, Sicherungsköpfe oder andere angeschlossene Geräte.

Über die bereits erläuterte Funktionalität hinaus kann die Leistungseinheit zusätzliche Elemente aufweisen und/oder Funktionen erfüllen. Bspw. kann die Leistungseinheit eine Vorrichtung zur Temperaturmessung aufweisen. So kann die Betriebstemperatur überwacht und im Fall einer drohenden Überhitzung, bspw. durch zu hohe Leistungsentnahme, eine Abschaltung oder eine Ansteuerung des elektrischen Wandlers zur Reduzierung bereitgestellter elektrischer Leistung erfolgen. Die Temperaturmessung kann als Kurzschlusserkennung dienen, oder es kann eine andere Form der Kurzschlusserkennung, bspw. durch Strommessung vorgesehen sein. Die Leistungseinheit kann eine oder mehrere Einrichtungen zur Signalisierung, insbesondere optischen Signalisierung aufweisen, bspw. zur Anzeige des jeweiligen Betriebszustandes. Es ist auch möglich, dass an der Leistungseinheit zusätzlich zur ersten Verbindung mit der Sicherungszentrale ein Anschluss für eine separate, d. h. nicht von der Sicherungszentrale gespeiste elektrische Leistungsversorgung vorgesehen ist.

Die Leistungseinheit kann eine Überwachungseinheit zur Überwachung von Strom, Spannung und/oder elektrischer Leistung aufweisen. Die Überwachung kann sich auf die von dem elektrischen Wandler gelieferte Leistung sowie alternativ oder zusätzlich auch auf einen separaten Anschluss, bspw. einen Anschluss zur Leistungsversorgung mit festgelegter Spannung beziehen. Die Überwachungseinrichtung kann insbesondere eine Überwachung daraufhin durchführen, ob ein angeschlossenes Gerät elektrisch von der Versorgung getrennt wird, um so eine zusätzliche Sicherungsfunktion zu erreichen. Die Überwachungseinrichtung kann bspw. dazu vorgesehen sein, einen Abfall eines an einen angeschlossenen Verbraucher zugeführten Stroms unterhalb einer Minimalschwelle zu detektieren.

Eine Ausführungsform der Erfindung wird nachfolgend anhand von Zeichnungen näher beschrieben. Dabei zeigen:
- Fig. 1: eine schematische Darstellung eines Warensicherungssystems;
- Fig. 2: in schematischer Darstellung eine Leistungseinheit und ein daran angeschlossener Sicherungskopf des Warensicherungssystems aus Fig. 1.

Die Darstellung und Erläuterung der Ausführungsform ist dabei lediglich beispielhaft zu verstehen. Die Zeichnungen sind rein schematische Darstellungen und keine Schaltpläne. Insbesondere wird mit den gezeigten Verbindungslinien zwischen verschiedenen Einheiten jede denkbare Form der Verbindung bezeichnet, wobei es sich auch um rein logische Verbindungen handeln kann, die in einer konkreten Realisierung mit einem oder mehreren Leitern realisiert sein können.

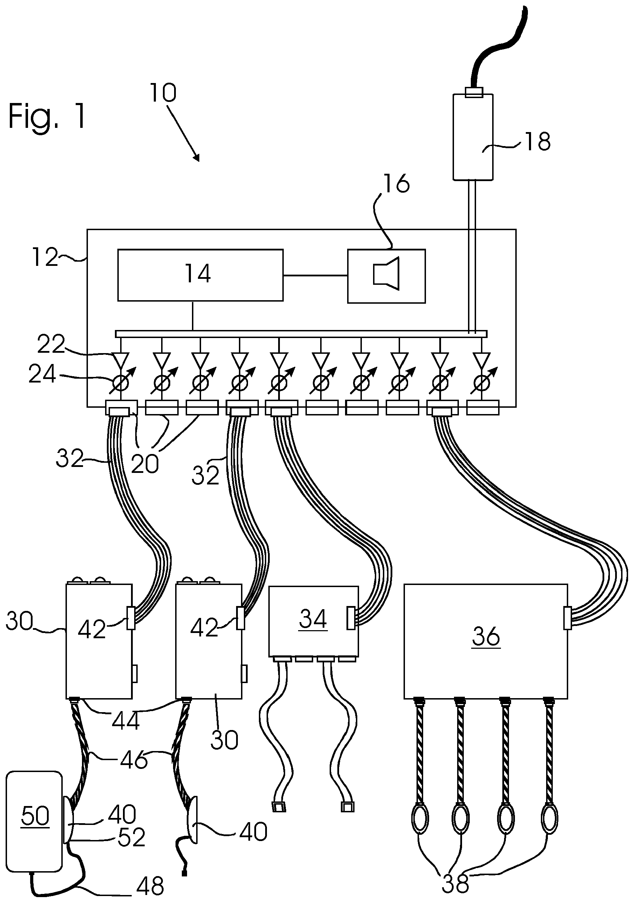

Fig. 1 zeigt in schematischer Darstellung ein Warensicherungssystem 10 mit einer Sicherungszentrale 12. Die Sicherungszentrale 12 verfügt über eine Zentraleinheit 14, eine daran angeschlossene Alarmeinheit 16, eine Leistungsversorgung 18 sowie eine Mehrzahl von Anschlüssen 20.

In der bevorzugten Ausführung umfasst die Zentraleinheit 14 einen Mikroprozessor, auf dem ein Steuerprogramm ausgeführt wird. Die Zentraleinheit 14 ist mit jedem der Anschlüsse 20 über Signalleitungen (nicht dargestellt) verbunden, so dass eine Kommunikation mit digitalen Signalen möglich ist, wie nachfolgend näher erläutert wird.

Weiter verfügt die Sicherungszentrale 12 an jedem Anschluss 20 über eine Leistungsversorgung 22, mit der an jedem der Anschlüsse 20 eine konstante, fest vorgegebene Versorgungsspannung (im bevorzugten Beispiel 24V Gleichspannung) bereitgestellt wird. An jedem Anschluss 20 kann dabei der jeweils entnommene Strom durch eine Messvorrichtung 24 ermittelt und das Ergebnis durch die Zentraleinheit 14 ausgewertet werden. Die Leistungsversorgungen 22 sind auch durch die Zentraleinheit 14 selektiv an- und abschaltbar.

An den Anschlüssen 20 sind im gezeigten Beispiel verschiedene Geräte angeschlossen, insbesondere zwei Leistungseinheiten 30, die über eine erste Kabelverbindung mit passendem Stecker an zwei verschiedenen Anschlüssen 20 eingesteckt sind.

Die nachfolgende Beschreibung konzentriert sich in erster Linie auf den Betrieb der angeschlossenen Leistungseinheiten 30. Weitere an die Anschlüsse 20 der Sicherungszentrale 12 angeschlossene Geräte können bspw. Ein- oder Mehrfachverteiler für konstante Spannungsversorgung und/oder für passive Sicherungsköpfe sein. Die beispielhaft in Fig. 1 dargestellte 4-Port Leistungsversorgungseinheit 34 mit konstanter Spannungsversorgung sowie der weiter gezeigte 4-fach Sicherungsadapter 36 mit vier angeschlossenen, passiven Sicherungsköpfen 38 sind lediglich beispielhaft dafür gezeigt, dass neben den Leistungseinheiten 30 auch weitere Geräte angeschlossen sein können.

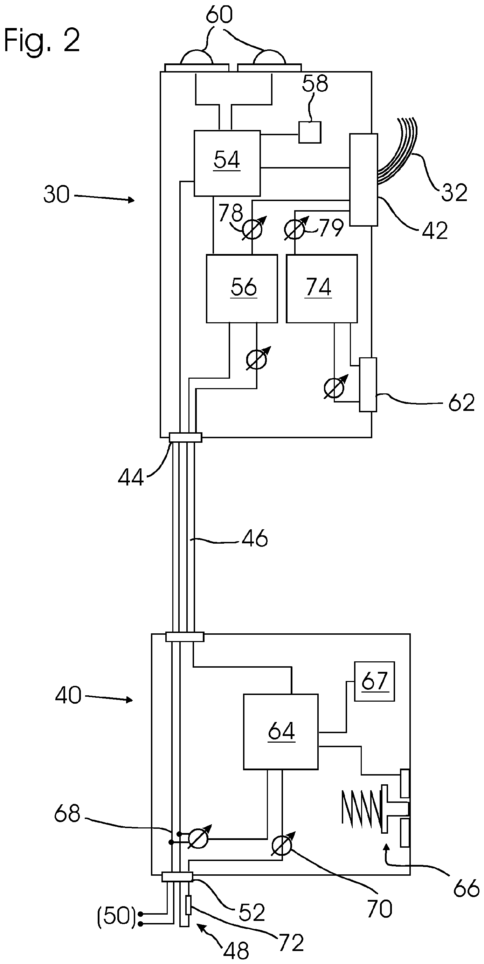

Die beiden Leistungseinheiten 30 sind identisch ausgebildet und verfügen, wie in Fig. 2 dargestellt, jeweils über einen ersten Anschluss 42 für die erste Kabelverbindung 32 und einen zweiten Anschluss 44 für ein Spiralkabel 46 als zweite Kabelverbindung.

Über die zweite Kabelverbindung 46 ist an jede der Leistungseinheiten 30 jeweils ein Sicherungskopf 40 angeschlossen, der zur Anbringung an einem zu sichernden elektrischen Gerät 50 vorgesehen ist. Dabei ist zusätzlich das zu sichernde Gerät 50 über ein kurzes Kabel 48 an einem Versorgungsanschluss 52 des Sicherungskopfes 40 angeschlossen und wird so mit elektrischer Leistung versorgt.

Fig. 2 zeigt schematisch Aufbau und Verbindung von Leistungseinheit 30 und Sicherungskopf 40. Wie dort schematisch dargestellt umfasst die Leistungseinheit 30 eine Zentraleinheit 54 zur Ausführung eines Betriebsprogramms sowie Leistungsversorgungen 56, 74. An die Zentraleinheit 54 sind ein Temperatursensor 58 sowie Signal-LEDs 60 und eine Strommessvorrichtung 78 angeschlossen.

Die Leistungsversorgungen 56, 74 sind jeweils Wandler-Schaltungen, die die von der Sicherungszentrale 12 über die erste Verbindung 32 und den Anschluss 42 zugeführte elektrische Energie umsetzen. Die geregelte Leistungsversorgung 56 versorgt über den Anschluss 44 und die zweite Kabelverbindung 46 den Sicherungskopf 40 mit elektrischer Leistung einer wählbaren Spannung. Die Leistungsversorgung 74 dient zur Bereitstellung einer festgelegten Spannung von bspw. 5 V am Anschluss 62. Beide Anschlüsse 44, 62 sind stromüberwacht, d.h. der jeweilige Strom wird durch geeignete Erfassungsschaltungen ermittelt und die Werte in der Zentraleinheit 54 verarbeitet.

Die zweite Kabelverbindung 46 ist ebenso wie die erste Kabelverbindung 32 lediglich schematisch mit mehreren Leitern dargestellt, ohne dass hierdurch eine Zuordnung zu den jeweiligen Verbindungen an den Anschlüssen 42, 44 angegeben werden soll. Die Kabelverbindungen dienen wie angegeben sowohl zu Übertragung von Signalen als auch zur Übertragung elektrischer Leistung. In einer konkreten Ausführung können hierfür eine jeweils passende Anzahl von parallelen Leitern vorgesehen sein.

Der Sicherungskopf 40 umfasst eine Zentraleinheit 64 zur Ausführung eines Betriebsprogramms, einen Sicherungssensor 66 als Abhebesensor zur Erkennung der ordnungsgemäßen Anbringung an das zu sichernde Gerät 50, einen Sicherungssensor 67 als Lagesensor, sowie eine Spannungs-Messeinrichtung 68. Weiter ist eine Widerstandsmessvorrichtung 70 vorgesehen. Die Messvorrichtungen 68, 70 sowie die Sicherungssensoren 66, 67 sind mit der Zentraleinheit verbunden, so dass die jeweiligen Signale dort empfangen und verarbeitet werden.

Das an den Versorgungsanschluss 52 des Sicherungskopfes 40 angeschlossene Kabel 48 weist außer den zum gesicherten Gerät 50 führenden Leitern ein Widerstandselement 72 auf. Alternativ kann das Widerstandselement 72 auch am Sicherungskopf 40 vorgesehen sein, bspw. als Adapter zum Einstecken des Kabels 48. Mit Hilfe des Widerstandselements 72 wird gemäß einer festgelegten, gespeicherten Tabelle ein Vorgabewert für die vom Gerät 50 benötigte Spannung festgelegt. Unterschiedliche Widerstandswerte stehen dabei für unterschiedliche Spannungen.

Wie oben bereits erläutert sind sowohl die Sicherungszentrale 12 als auch die Leistungseinheiten 30 und Sicherungsköpfe 40 jeweils mikroprozessor-gesteuert, d. h. die programmierbaren Zentraleinheiten 14, 54, 64 führen jeweils Betriebsprogramme aus, die das Verhalten der Sicherungszentrale 12, der Leistungseinheiten 30 und der Sicherungsköpfe 40 gemäß der nachfolgend beschriebenen Funktionalität steuern.

Primär besteht die Funktion des Sicherungssystems 10 in der Sicherung von Waren gegen Wegnahme. Mit dem in Fig. 1 beispielhaft gezeigten System können einerseits beliebige Waren durch die rein passiven Sicherungsköpfe 38 am mehrfach Adapter 36 gesichert werden. Wenn einer der Anbringungssensoren an einem der Sicherungsköpfe 38 eine Entfernung des jeweiligen Sicherungskopfes 38 von der zu sichernden Ware signalisiert, wird das jeweilige Sensorsignal von einer Zentraleinheit des mehrfach Adapters 36 ausgewertet. Mit einer digitalen Übermittlung wird das Alarmsignal über den jeweiligen Anschluss 20 der Sicherungszentrale 12 an die Zentraleinheit 14 übermittelt und dort verarbeitet, so das eine Alarmierung ausgelöst werden kann, bspw. durch Aktivierung der Alarmsirene 16.

In vergleichbarer Weise dienen die aktiven Sicherungsköpfe 40 zur Sicherung von Waren, hier beispielhaft dem dargestellten elektrischen Gerät 50. Wie in Fig. 1 schematisch dargestellt, ist ein Sicherungskopf 40 unmittelbar an dem zu sichernden Gerät 50 angebracht. Die Anbringung wird mittels des Sicherungssensors 66, der in Fig. 2 schematisch gezeigt ist, überwacht. Im Fall der Trennung des Sicherungskopfes 40 vom Gerät 50 wird ein Sensorsignal erzeugt, das von der Zentraleinheit 64 verarbeitet wird. Zugleich wird die Lage und ggfs. Bewegung des Geräts 50 mittels des Lagesensors 67 überwacht und es werden Lageänderungen an die Zentraleinheit 64 gemeldet.

Erkennt die Zentraleinheit 64 aus den Sensorsignalen einen Alarmzustand, meldet sie dies über die zweite Kabelverbindung 46 als digitales Signal an die Leistungseinheit 30. Von dort wird die Alarmmeldung durch die Zentraleinheit 54 der Leistungseinheit 30 wiederum als digitales Signal über die erste Kabelverbindung 32 an die Sicherungszentrale 12 übermittelt und dort von der Zentraleinheit 14 zur Auslösung der Alarmierung verarbeitet.

Wie bereits kurz erwähnt, kann das Gerät 50 durch die aktiven Sicherungsköpfe 40 des Warensicherungssystems 10 nicht nur gesichert, sondern auch mit elektrischer Leistung versorgt werden. Hierfür ist in der Leistungseinheit 30 der Wandler 56 als regelbare Spannungsversorgungsschaltung 56 vorgesehen. Die Spannungsversorgungsschaltung 56 wird über die erste Kabelverbindung 32 und den Anschluss 42 mit elektrischer Leistung in Form der festen an den Ausgängen 20 bereitgestellten Versorgungsspannung (im Beispiel 24V) versorgt und von der Zentraleinheit 54 der Leistungseinheit 30 so angesteuert, dass die feste Versorgungsspannung je nach aktueller Anforderung in verschiedene Spannungen zur Versorgung des elektrischen Geräts 50 gewandelt wird.

Dabei wird das elektrische Gerät 50 über das Kabel 48 an den Versorgungsanschluss 52 des Sicherungskopfes 40 angeschlossen, das einerseits zur Kopplung des Versorgungsanschlusses 52 mit dem Ladeanschluss des elektrischen Geräts 50 und andererseits mittels des Widerstandselements 72 zur Auswahl eines Vorgabewerts für die benötigte Spannung dient. Anhand des Widerstandswerts, der über die Widerstandsmessvorrichtung 70 ermittelt und in der Zentraleinheit 64 des Sicherungskopfes 40 verarbeitet wird, wird mittels einer Tabelle ein Vorgabewert für die zu liefernde Spannung ausgewählt.

Im Sicherungskopf 40 wird ein Ist-Wert der am Versorgungsanschluss 52 gelieferten Spannung über die Spannungsmessvorrichtung 68 gemessen und an die Zentraleinheit 64 gemeldet. Die Zentraleinheit 64 bildet eine Differenz zwischen dem Ist-Wert der Spannung und dem durch den ermittelten Widerstandswert des Widerstandselements 72 ausgewählten Vorgabewert und ermittelt so eine Regelabweichung. Die Regelabweichung wird über die zweite Kabelverbindung 46 als digitales Signal an die Zentraleinheit 54 der Leistungseinheit 30 gemeldet. Abhängig von der Regelabweichung steuert die Zentraleinheit 54 die Spannungsversorgungsschaltung 56 so an, dass die gelieferte Spannung dem Vorgabewert angepasst wird.

Eine Spannung zur Versorgung des zweiten Leistungsversorgungs-Anschlusses 62wird durch den Spannungsregler 74 geliefert. Im gezeigten Beispiel ist die am Anschluss 62 gelieferte Spannung festgelegt und beträgt bspw. 5V. Die Spannung kann aber alternativ auch wählbar sein, z.B. in ähnlicher Weise durch ein Widerstandselement wie beim Kabel 48 am Anschluss 52 des Sicherungskopfes 40. Ein zu sicherndes elektrisches Gerät kann dann zusätzlich am Anschluss 62 einer der Leistungseinheiten 30 angeschlossen und dort mit elektrischer Energie versorgt werden. Dabei erfolgt innerhalb der Spannungsversorgungsschaltung 56 die Erfassung des gelieferten Stroms. Dabei kann das Gerät über den Anschluss nicht nur geladen, sondern auch gesichert werden. Wird das zu sichernde Gerät elektrisch vom Anschluss 62 getrennt, so wird dies durch die Spannungsversorgungsschaltung 74 erkannt, an die Zentraleinheit 54 gemeldet und so durch eine entsprechende Signalisierung an die Sicherungszentrale 12 ein Alarm ausgelöst.

Dieselbe Lade-/Sicherungsfunktion wird auch durch die Anschlüsse des 4-Port Adapters 34 ermöglicht.

Das Warensicherungssystem wird wie erwähnt durch eine zentrale primäre Leistungsversorgung 18 an der Sicherungszentrale 12 versorgt, insbesondere durch ein Netzteil. Von der Sicherungszentrale 12 wird so die elektrische Leistung für alle angeschlossenen Geräte 30, 34, 36 bereitgestellt. Dabei ist es in alternativen Ausführungsformen (nicht dargestellt) auch möglich, dass zusätzliche Netzteile für eine oder mehrere der angeschlossenen Leistungseinheiten 30 separat vorgesehen und direkt an diese angeschlossen werden können.

Zur Verteilung der durch das Netzteil 18 gelieferten primären Leistung dient ein durch die Zentraleinheit 14 der Sicherungszentrale 12 vorgegebenes Leistungs-Management. Dabei stellt die Zentraleinheit 14 zunächst fest, wie viele und welche Geräte 30, 34, 36 an den Anschlüssen 20 angeschlossen sind.

In der Zentraleinheit ist der maximale Wert der zur Verfügung stehenden primären Leistung gespeichert. Dieser ist insbesondere begrenzt durch die Leistung des Netzteils 18. Diese primäre Leistung steht insgesamt für alle angeschlossenen Geräte zur Verfügung.

Um eine geeignete Verteilung der primären Leistung zu erreichen, teilt die Zentraleinheit 14 durch die Übermittlung digitaler Signale über die Kabelverbindungen 32 den Zentraleinheiten 54 der angeschlossenen Leistungseinheiten 30 sowie ebenso den weiteren Geräten 34, 46 jeweils Werte für die ihnen zur Verfügung stehende elektrische Leistung zu. Geeignete Werte können bspw. ermittelt werden, indem die insgesamt verfügbare primäre Leistung durch die Anzahl angeschlossener Geräte 30, 34, 26 geteilt wird.

Alternativ sind auch andere Strategien zur Leistungsverteilung möglich. Dabei kann bspw. in der Sicherungszentrale 12 durch die Messvorrichtungen 24 oder durch digitale Übermittlung von Messwerten der angeschlossenen Geräte 30, 34, 36 auch stets die aktuelle Leistungsentnahme jedes der Geräte 30, 34, 36 überwacht werden. Bei der Vorgabe geeigneter Maximalwerte für die angeschlossenen Geräte 30, 34, 36 kann die so ermittelte Leistungsentnahme berücksichtigt werden.

So kann in jedem Gerät 30, 34, 36 der Maximalwert der entnehmbaren elektrischen Leistung gespeichert werden. Die Zentraleinheit 54 jeder Leistungseinheit 30 steuert die zugehörige Spannungsversorgungen 56, 74 dann stets so an, dass der maximale Leistungswert nicht überschritten wird. Dies kann bspw. erfolgen, indem der von den Spannungsversorgungen 56, 74 entnommene Strom mittels der Strommesseinrichtungen 78, 79 gemessen und hieraus unter Berücksichtigung der festen Spannung die Leistung berechnet wird.

Weiter können die Leistungseinheiten 30 eine Mehrzahl von Signalisierungs- und Überwachungsfunktionen erfüllen. Bspw. kann durch die LEDs 60 eine Signalisierung des jeweiligen Betriebszustandes erfolgen. Mittels des Temperatursensors 58 kann die Betriebstemperatur erfasst werden, wobei die Zentraleinheit 54 bei einem Überschreiten einer Warnschwelle die Leistung der Spannungsversorgungsschaltung 56 (sowie ggfs. auch der Spannungsversorgungsschaltung 74) reduzieren und bei Überschreitung eines Maximalwerts die Leistungseinheit 30 insgesamt abschalten kann.

Zusammengefasst wird gemäß der beschriebenen beispielhaften Ausführungsform mit dem vorgestellten Konzept eines Warensicherungssystems 10 mit modularem Aufbau eine große Flexibilität erreicht. Die Sicherungszentrale 12 verfügt mit der Zentraleinheit 14 über die zentrale steuernde Intelligenz, ist aber hinsichtlich der Leistungselektronik sehr einfach aufgebaut, wobei im gezeigten Beispiel eine jeweils konstante Spannung an allen Anschlüssen 20 geliefert wird. Eine Wandlung der Spannung erfolgt extern in den Leistungseinheiten 30. Durch das Leistungsmanagement kann die primäre Leistungsversorgung 18 der Sicherungszentrale 12 sehr effizient ausgelegt werden, da es nicht notwendig ist, für jeden der Anschlüsse 20 die jeweils theoretische maximale Leistung vorzuhalten.

Zudem sind bei der beschriebenen Ausführung des Warensicherungssystems die Komponenten jeweils "intelligent", d.h. mit einer Zentraleinheit ausgestattet und können über digitale Signale miteinander kommunizieren. Übermittelt werden können so einerseits Leistungsdaten (bspw. entnommene/benötigte Leistung von den angeschlossenen Einheiten an die Sicherungszentrale und zugewiesene/maximale Leistung von der Sicherungszentrale an die Einheiten). Andererseits sind viele zusätzliche Steuerfunktionen sowie Funktionen der Datenerhebung über die digitale Datenübermittlung realisierbar.

Dabei können die verschiedenen angegebenen Einzelheiten und Ausführungen der Elemente des Warensicherungssystems 10 in alternativen Ausführungsformen auch abgewandelt oder anders kombiniert werden.

Bspw. kann auf zusätzliche Geräte 34, 36 verzichtet werden, so dass ausschließlich Leistungseinheiten 30 an den Anschlüssen 20 angeschlossen sind.

Während die Auswahl eines Vorgabewerts für die Spannungsversorgung eines elektrischen Geräts 50 durch ein Widerstandselement 72 im Kabel 48 sehr komfortabel ist, kann alternativ auch eine Auswahl des Vorgabewerts bspw. durch andere Elemente wie kapazitive Auswahlelemente oder durch einen Wahlschalter am Sicherungskopf 40 oder an der Leistungseinheit 30 erfolgen.

In besonders einfachen Ausführungen kann die Leistungsversorgung 56 in den Leistungseinheiten 30 auch fest auf einen Wert eingestellt sein, um die über die erste Kabelverbindung 32 gelieferte feste höhere Spannung in eine feste geringere Spannung, zur Versorgung eines Anschlusses 62 zu wandeln.

In alternativen Ausführungsformen können zudem zusätzliche Einheiten und Funktionen vorgesehen sein, insbesondere eine digitale, bidirektionale Kommunikationsschnittstelle an der Sicherungszentrale 12 sowie Anschlussmöglichkeiten für eine Beleuchtung an den Leistungseinheiten 30.

So kann für Beleuchtungszwecke ein gesteuerter oder sogar geregelter, bevorzugt mehrkanaliger elektrischer Anschluss vorgesehen sein, bspw. eine Anschlussmöglichkeit für (LED-)Beleuchtungseinheiten, so dass diese mit elektrischer Leistung versorgt und/oder angesteuert werden können. Insbesondere kann in den Leistungseinheiten eine 3-kanalige Versorgungsschaltung zur Ansteuerung von RGB-Beleuchtungseinheiten mit jeweils PWM-geregelten Rot, Grün und Blau-Kanälen vorgesehen sein, die durch die Zentraleinheit 54 gesteuert werden kann.

Mittels der Kommunikationsschnittstelle können einerseits Daten an ein externes Gerät übermittelt werden. Dies kann bspw. Betriebsdaten der Sicherungszentrale umfassen, ebenso aber auch von den Einheiten 30, 34, 36 übermittelte Daten. Beispielsweise können in einem Sicherungskopf 40 mittels des Lagesensors 67 Bewegungsdaten ermittelt werden (z.B. wie häufig das gesicherte Gerät 50 bewegt wurde). Diese Bewegungsdaten können über die erste und zweite Verbindung 32, 46 digital an die Sicherungszentrale 12 übermittelt und dort über die Schnittstelle ausgegeben werden.

Andererseits können auch Daten von dem externen Gerät über die Schnittstelle an die Sicherungszentrale übermittelt werden, insbesondere Steuerkommandos und/oder Software-Updates. Beispielsweise kann von dem externen Gerät eine Steuerung des oben erläuterten Anschlusses für Beleuchtungseinheiten vorgegeben werden.

Sowohl Steuerkommandos als auch Updates können dabei über die digitalen Datenverbindungen innerhalb des Sicherungssystems 10 an die jeweiligen Einheiten weiterverteilt werden. Von der Schnittstelle an der Sicherungszentrale 12 können so bspw. Software-Updates an die Sicherungsköpfe 40 übermittelt werden, oder Beleuchtungs-Steuerkommandos an die Leistungseinheiten 30.

## Patentansprüche

1. Warensicherungssystem für elektrische Geräte, mit
- einer Sicherungszentrale (12) mit einer Mehrzahl von Anschlüssen (20),
- mindestens einer über eine erste Verbindung (32) an einem der Anschlüsse (20) angeschlossen Leistungseinheit (30),
- und mindestens einem über eine zweite Verbindung (46) an der Leistungseinheit (30) angeschlossenen Sicherungskopf (40) zur Anbringung an einem zu sichernden Gerät (50), wobei der Sicherungskopf (40) einen Sicherungssensor (66) aufweist zur Erzeugung eines Sensorsignals im Fall der Trennung des Sicherungskopfes (40) von dem Gerät (50), **dadurch gekennzeichnet dass** die Sicherungszentrale (12) ausgebildet ist zur Auslösung einer Alarmierung bei Erkennung des Sensorsignals,
- wobei die Sicherungszentrale (12) ausgebildet ist zur Bereitstellung von elektrischer Leistung für die Leistungseinheit (30) mit festgelegtem Strom oder festgelegter Spannung über die erste Verbindung (32),
- und die Leistungseinheit (30) einen einstellbaren elektrischen Wandler (56) aufweist, um die über die erste Verbindung (32) bereitgestellte elektrische Leistung in einen Versorgungsstrom oder eine Versorgungsspannung zu wandeln, die über die zweite Verbindung (46) einem Versorgungsanschluss (52) am Sicherungskopf (40) zugeführt wird,
- wobei der Sicherungskopf (40) und die Leistungseinheit (30) so ausgebildet sind, dass über die zweite Verbindung ein Einstellsignal für den elektrischen Wandler (56) übermittelt wird,
- und der elektrische Wandler (56) gemäß des Einstellsignals eingestellt wird,
- wobei am Sicherungskopf (40) eine Messvorrichtung (68) zur Ermittlung eines Messwerts der Spannung und/oder des Stroms am Versorgungsanschluss (52) vorgesehen ist,
- und wobei die Leistungseinheit (30) und der Sicherungskopf (40) so ausgebildet sind, dass zwischen dem Messwert und einem Vorgabewert eine Abweichung ermittelt wird,
- und der elektrische Wandler (56) entsprechend der Abweichung geregelt wird.

2. Warensicherungssystem nach Anspruch 1, bei dem
- die Leistungseinheit (30) und der Sicherungskopf (40) so ausgebildet sind, dass der Messwert und/oder die Abweichung über die zweite Verbindung (46) übermittelt werden.

3. Warensicherungssystem nach einem der vorangehenden Ansprüche, bei dem
- die Sicherungszentrale (12) eine Leistungssteuerungseinrichtung zur Steuerung der an den Anschlüssen (20) entnommenen elektrischen Leistung aufweist,
- wobei die Leistungssteuerungseinrichtung dazu ausgebildet ist, über die erste Verbindung (32) einen Maximalwert für die elektrische Leistung, den Strom und/oder die Spannung an die Leistungseinheit (30) zu übermitteln,
- und die Leistungseinheit (30) dazu ausgebildet ist, den elektrischen Wandler (56) so anzusteuern, dass die über die zweite Verbindung gelieferte elektrische Leistung, der Strom und/oder die Spannung den Maximalwert nicht überschreiten.

4. Warensicherungssystem nach Anspruch 3, bei dem
- die Leistungssteuereinrichtung so ausgebildet ist, dass die Anzahl der angeschlossenen Leistungseinheiten (30) und/oder elektrische Größen der Entnahme elektrischer Energie an den Versorgungsanschlüssen (20) und/oder elektrische Größen der von den Leistungseinheiten (30) gelieferte elektrischen Energie ermittelt werden und ausgehend hiervon der Maximalwert festgelegt wird.

5. Warensicherungssystem nach einem der vorangehenden Ansprüche, bei dem
- die Leistungseinheit (30) eine Vorrichtung (58) zur Temperaturmessung aufweist.

6. Warensicherungssystem nach einem der vorangehenden Ansprüche, bei dem
- die Leistungseinheit (30) und die Sicherungszentrale (12) dazu ausgebildet sind, über die erste Verbindung (32) digitale Daten zu übermitteln.

7. Warensicherungssystem nach einem der vorangehenden Ansprüche, bei dem
- an der Leistungseinheit (30) ein Anschluss (62) zur elektrischen Versorgung vorgesehen ist,
- wobei die Leistungseinheit (30) eine Überwachungseinrichtung zur Überwachung von Strom, Spannung und/oder elektrischer Leistung an dem Anschluss (62) umfasst.

8. Warensicherungssystem nach einem der vorangehenden Ansprüche, bei dem
- an der Leistungseinheit (30) ein Anschluss für eine separate elektrische Leistungsversorgung vorgesehen ist.

9. Warensicherungssystem nach einem der vorangehenden Ansprüche, bei dem
- an der Leistungseinheit (30) ein Anschluss für eine Beleuchtungseinheit vorgesehen ist.

10. Warensicherungssystem nach einem der vorangehenden Ansprüche, bei dem
- an der Sicherungszentrale (12) eine Schnittstelle zur Übermittlung von digitalen Daten vorgesehen ist.

11. Verfahren zur Sicherung von elektrischen Geräten (50), bei dem
- an einer Sicherungszentrale (12) mit einer Mehrzahl von Anschlüssen (20) über eine erste Verbindung (32) an einem der Anschlüsse (20) eine Leistungseinheit (30) angeschlossen ist, und ein Sicherungskopf (40) zur Anbringung an einem zu sichernden Gerät (50) über eine zweite Verbindung (46) an der Leistungseinheit (30) angeschlossenen ist,
- wobei ein Sicherungssensor (66) am Sicherungskopf (40) im Fall der Trennung des Sicherungskopfes (40) von dem Gerät (50) ein Sensorsignal ausgibt, **dadurch gekennzeichnet dass** die Sicherungszentrale (12) bei Erkennung des Sensorsignals eine Alarmierung auslöst,
- wobei die Sicherungszentrale (12) elektrische Leistung für die Leistungseinheit (30) mit festgelegtem Strom oder festgelegter Spannung über die erste Verbindung (32) bereitstellt,
- und die über die erste Verbindung bereitgestellte elektrische Leistung in der Leistungseinheit (30) durch einen einstellbaren elektrischen Wandler (56) in einen Versorgungsstrom und/oder eine Versorgungsspannung gewandelt und über die zweite Verbindung (46) einem Versorgungsanschluss (52) am Sicherungskopf (40) zugeführt wird,
- wobei über die zweite Verbindung ein Einstellsignal für den elektrischen Wandler (56) übermittelt und der elektrische Wandler (56) gemäß des Einstellsignals eingestellt wird,
- wobei durch eine Messvorrichtung (68) am Sicherungskopf (40) ein Messwert der Spannung und/oder des Stroms am Versorgungsanschluss (52) ermittelt wird,
- und wobei eine Abweichung zwischen dem Messwert und einem Vorgabewert ermittelt und der elektrische Wandler (56) entsprechend der Abweichung geregelt wird.

## Claims

1. A merchandise security system for electrical appliances, comprising
- a security center (12) comprising a plurality of terminals (20),
- at least one power unit (30) attached via a first connection (32) to one of the terminals (20),
- and at least one security head (40) for affixing to an appliance (50) to be secured, which is attached via a second connection (46) to the power unit (30), wherein the security head (40) has a security sensor (66) for producing a sensor signal in the event of the security head (40) being separated from the appliance (50), **characterized in that** the security center (12) is configured to trigger an alarm when the sensor signal is detected,
- wherein the security center (12) is configured to provide electric power for the power unit (30) with a fixed current or fixed voltage via the first connection (32),
- and the power unit (30) has an adjustable electric converter (56) in order to convert the electric power provided via the first connection (32) into a supply current or a supply voltage, which is supplied via the second connection (46) to a supply terminal (52) on the security head (40),
- wherein the security head (40) and the power unit (30) are configured such that an adjustment signal for the electric converter (56) is transmitted via the second connection,
- and the electric converter (56) is adjusted according to the adjustment signal,
- wherein a measuring device (68) for determining a measured value of the voltage and/or of the current at the supply terminal (52) is provided on the security head (40),
- and wherein the power unit (30) and the security head (40) are configured such that a deviation is determined between the measured value and a default value,
- and the electric converter (56) is regulated in accordance with the deviation.

2. The merchandise security system according to claim 1, in which
- the power unit (30) and the security head (40) are configured such that the measured value and/or the deviation are transmitted via the second connection (46).

3. The merchandise security system according to one of the preceding claims, in which
- the security center (12) has a power control apparatus for controlling the electric power extracted at the terminals (20),
- wherein the power control apparatus is configured to transmit a maximum value for the electric power, the current and/or the voltage to the power unit (30) via the first connection (32),
- and the power unit (30) is configured to actuate the electric converter (56) such that the electric power supplied via the second connection, the current and/or the voltage do not exceed the maximum value.

4. The merchandise security system according to claim 3, in which
- the power control apparatus is configured such that the number of the attached power units (30) and/or electric variables of the extraction of electric energy at the supply terminals (20) and/or electric variables of the electric energy supplied by the power units (30) is/are determined and, starting herefrom, the maximum value is fixed.

5. The merchandise security system according to one of the preceding claims, in which
- the power unit (30) has a device (58) for measuring the temperature.

6. The merchandise security system according to one of the preceding claims, in which
- the power unit (30) and the security center (12) are configured to transmit digital data via the first connection (32).

7. The merchandise security system according to one of the preceding claims, in which
- a terminal (62) for the electric supply is provided at the power unit (30),
- wherein the power unit (30) comprises a monitoring apparatus for monitoring the current, voltage and/or electric power at the terminal (62).

8. The merchandise security system according to one of the preceding claims, in which
- a terminal for a separate electric power supply is provided at the power unit (30).

9. The merchandise security system according to one of the preceding claims, in which
- a terminal for a lighting unit is provided at the power unit (30).

10. The merchandise security system according to one of the preceding claims, in which
- an interface for transmitting digital data is provided at the security center (12).

11. A method for securing electrical appliances (50), in which
- a power unit (30) is attached at a security center (12) comprising a plurality of terminals (20) via a first connection (32) to one of the terminals (20), and a security head (40) for fastening to an appliance (50) to be secured is attached via a second connection (46) to the power unit (30),
- wherein a security sensor (66) on the security head (40) outputs a sensor signal in the event of the security head (40) being separated from the appliance (50), **characterized in that**
- the security center (12) triggers an alarm when the sensor signal is detected,
- wherein the security center (12) provides electric power for the power unit (30) with a fixed current or fixed voltage via the first connection (32),
- and the electric power provided via the first connection is converted in the power unit (30) by an adjustable electric converter (56) into a supply current and/or a supply voltage and is supplied via the second connection (46) to a supply terminal (52) at the security head (40),
- wherein an adjustment signal for the electric converter (56) is transmitted via the second connection and the electric converter (56) is adjusted according to the adjustment signal,
- wherein a measured value of the voltage and/or of the current at the supply terminal (52) is determined by a measuring device (68) at the security head (40),
- and wherein a deviation between the measured value and a default value is determined and the electric converter (56) is regulated in accordance with the deviation.

## Revendications

1. Système de sécurité de marchandise destiné à des appareils électriques, comprenant
- une centrale de sécurité (12) avec de multiples connexions (20),
- au moins une unité de puissance (30) raccordée à l'une des connexions (20) par un premier câble de connexion (32),
- et au moins une tête de sécurisation (40) raccordée à l'unité de puissance (30) par un second câble de connexion (46) à monter sur un appareil à protéger (50), dans lequel la tête de sécurisation (40) présente un capteur de sécurité (66) servant à générer un signal de capteur en cas de séparation de la tête de sécurisation (40) de l'appareil (50),
**caractérisé en ce que**
la centrale de sécurité (12) est conçue pour déclencher une alarme lors de la détection du signal de capteur,
- dans lequel la centrale de sécurité (12) est conçue pour fournir une puissance électrique destinée à l'unité de puissance (30) avec un courant défini ou une tension définie par le biais du premier câble de connexion (32),
- et l'unité de puissance (30) présente un convertisseur électrique réglable (56) pour transformer la puissance électrique fournie par le biais du premier câble de connexion (32) en un courant d'alimentation ou en une tension d'alimentation, qui alimente une connexion d'alimentation (52) sur la tête de sécurisation (40) par le biais du second câble de connexion (46),
- dans lequel la tête de sécurisation (40) et l'unité de puissance (30) sont conçues de manière à ce qu'un signal de réglage destiné au convertisseur électrique (56) soit transmis par le second câble de connexion,
- et le convertisseur électrique (56) est réglé d'après le signal de réglage,
- dans lequel un dispositif de mesure (68) est prévu sur la tête de sécurisation (40) pour déterminer une valeur de mesure de la tension et / ou du courant sur la connexion d'alimentation (52),
- et dans lequel l'unité de puissance (30) et la tête de sécurisation (40) sont conçues de manière à ce qu'un écart soit déterminé entre la valeur de mesure et une valeur de consigne,
- et le convertisseur électrique (56) est réglé en fonction de l'écart.

2. Système de sécurité de marchandise selon la revendication 1, dans lequel
- l'unité de puissance (30) et la tête de sécurisation (40) sont conçues de manière à ce que la valeur de mesure et / ou l'écart soient transmis par le second câble de connexion (46).

3. Système de sécurité de marchandise selon l'une des revendications précédentes, dans lequel
- la centrale de sécurité (12) présente un moyen de commande de puissance servant à contrôler la puissance électrique prélevée sur les connexions (20),
- dans lequel le moyen de commande de puissance est conçu de manière à transmettre une valeur maximale de la puissance électrique, du courant et / ou de la tension à l'unité de puissance (30) par le biais du premier câble de connexion (32),
- et l'unité de puissance (30) est conçue de manière à activer le convertisseur électrique (56), de sorte que la puissance électrique fournie par le second câble de connexion, le courant et / ou la tension ne dépassent pas la valeur maximale.

4. Système de sécurité de marchandise selon la revendication 3, dans lequel
- le moyen de commande de puissance est conçu de manière à ce que le nombre des unités de puissance (30) raccordées et / ou des grandeurs électriques du prélèvement d'énergie électrique sur les connexions d'alimentation (20) et / ou des grandeurs électriques de l'énergie électrique fournie par les unités de puissance (30) soient déterminées et la valeur maximale soit définie sur cette base.

5. Système de sécurité de marchandise selon l'une des revendications précédentes, dans lequel
- l'unité de puissance (30) présente un dispositif (58) servant à mesurer la température.

6. Système de sécurité de marchandise selon l'une des revendications précédentes, dans lequel
- l'unité de puissance (30) et la centrale de sécurité (12) sont conçues de manière à transmettre des données numériques par le biais du premier câble de connexion (32).

7. Système de sécurité de marchandise selon l'une des revendications précédentes, dans lequel
- une connexion (62) est prévue sur l'unité de puissance (30) pour l'alimentation électrique,
- dans lequel l'unité de puissance (30) comporte un moyen de surveillance pour observer le courant, la tension et / ou la puissance électrique sur la connexion (62).

8. Système de sécurité de marchandise selon l'une des revendications précédentes, dans lequel
- une connexion est prévue sur l'unité de puissance (30) pour une alimentation électrique séparée.

9. Système de sécurité de marchandise selon l'une des revendications précédentes, dans lequel
- une connexion est prévue sur l'unité de puissance (30) pour une unité d'éclairage.

10. Système de sécurité de marchandise selon l'une des revendications précédentes, dans lequel
- une interface est prévue pour transmettre des données numériques sur la centrale de sécurité (12).

11. Procédé de sécurisation d'appareils électriques (50), dans lequel
- une unité de puissance (30) est raccordée à une centrale de sécurité (12) avec de multiples connexions (20) par un premier câble de connexion (32) sur l'une des connexions (20), et une tête de sécurisation (40) à monter sur un appareil à protéger (50) est raccordée à l'unité de puissance (30) par un second câble de connexion (46),
- dans lequel un capteur de sécurité (66) logé sur la tête de sécurisation (40) émet un signal de capteur en cas de séparation de la tête de sécurisation (40) de l'appareil (50)
**caractérisé en ce que** la centrale de sécurité (12) déclenche une alarme lors de la détection du signal de capteur,
- dans lequel la centrale de sécurité (12) fournit une puissance électrique destinée à l'unité de puissance (30) avec un courant défini ou une tension définie par le biais du premier câble de connexion (32),
- et la puissance électrique fournie par le premier câble de connexion est transformée dans l'unité de puissance (30) par un convertisseur électrique réglable (56) en un courant d'alimentation et / ou en une tension d'alimentation, puis alimente une connexion d'alimentation (52) sur la tête de sécurisation (40) par le biais du second câble de connexion (46),
- dans lequel un signal de réglage destiné au convertisseur électrique (56) est transmis par le second câble de connexion et le convertisseur électrique (56) est réglé d'après le signal de réglage,
- dans lequel une valeur de mesure de la tension et / ou du courant est déterminée sur la connexion d'alimentation (52) par un dispositif de mesure (68) sur la tête de sécurisation (40),
- et dans lequel un écart est déterminé entre la valeur de mesure et une valeur de consigne, puis le convertisseur électrique (56) est réglé en fonction de l'écart.
